# EUROPEAN PATENT APPLICATION

(11) **EP 3 587 634 A1**
(43) Date of publication of application: **01.01.2020**
(21) Application number: 19178390.1
(22) Date of filing: 05.06.2019
(51) Int. Cl.: D01H 9/18, G05B 19/418, G05D 1/02, B65H 75/16

(54) **CAN CARRIER, FIBER PROCESSING SYSTEM, AIR-JET SPINNING FRAME, CAN TRANSPORTATION METHOD, CAN TRANSPORTATION PROGRAM, AND SELF-PROPELLED CAN**

(30) Priority: 25.06.2018 JP 2018119674
(71) Applicant: Murata Machinery, Ltd., Kyoto-shi, Kyoto 601-8326 (JP)
(72) Inventor: Ikkai, Tomoyuki, Kyoto, 612-8686 (JP); Shigeyama, Masazumi, Kyoto, 612-8686 (JP); Susami, Hiroyuki, Kyoto, 612-8686 (JP)
(74) Representative: Hoffmann Eitle

(57) **Abstract**

A can carrier (D) transports a can (K) between a drawing frame (30) and an air-jet spinning frame (50) by travelling in a factory in which the drawing frame (30) and the air-jet spinning frame (50) are installed. The can carrier (D) includes a travelling section (26) that transports the can (K) by travelling in the factory, a storage unit (24) that stores therein a factory map, a travelling route determining unit (23) that determines based on the factory map a travelling route for travelling from the drawing frame (30) to the air-jet spinning frame (50), and a travelling control unit (25) that causes the travelling section (26) to travel autonomously based on the determined travelling route thereby transporting the can (K).

## Description

### BACKGROUND OF THE INVENTION

### 1. Field of the Invention

The present invention relates to a can carrier, a fiber processing system, an air-jet spinning frame, a can transportation method, a can transportation program and a self-propelled can.

### 2. Description of the Related Art

Japanese Patent Application Laid-open No. H11-279862 discloses a system for transporting a can, which contains a fiber bundle that has been subjected to a pre-processing, between a pre-processing machine that performs the pre-processing on the fiber bundle and a post-processing machine that performs a post-processing on the fiber bundle.

In this system, a can transport robot automatically transports the can to a transport destination of the can along a preset can transport path.

In the system disclosed in Japanese Patent Application Laid-Open No. H11-279862, if the installation position of the pre- and / or post-processing machines and the like in the factory where fiber processing is performed is changed, the can cannot be automatically transported unless the can transport path is newly set.

### SUMMARY OF THE INVENTION

One object of the present invention is to provide a can carrier, a fiber processing system, an air-jet spinning frame, a can transportation method, a can transportation program, and a self-propelled can that easily allow automatic transportation of a can even if the installation position of the pre- and / or post-processing machine and the like in a factory is changed.

A can carrier that travels inside a factory, in which a pre-processing machine that performs a pre-processing on a fiber bundle and a post-processing machine that performs a post-processing on the fiber bundle subjected to the pre-processing are installed, to transport a can that contains the fiber bundle between the pre-processing machine and the post-processing machine, according to one aspect of the present invention includes a travelling section that transports the can by travelling in the factory; a map storage section that stores therein a factory map indicating an installation position of equipment in the factory including installation positions of the pre-processing machine and the post-processing machine; a travelling route determining section that determines, based on the factory map, a travelling route for travelling from the pre-processing machine to the post-processing machine or from the post-processing machine to the pre-processing machine; and a travelling control section that causes the travelling section to travel autonomously based on the determined travelling route thereby transporting the can between the pre-processing machine and the post-processing machine.

In the above can carrier, a travelling route for transporting the can is determined based on the factory map. Therefore, even if there is a change in the installation positions of the pre- and / or post-processing machines or the like in the factory, it is only necessary to update the factory map, and the travelling route according to the new positions of the pre- and / or post-processing machines and the like after the change can be determined and the can carrier can travel autonomously based on the determined travelling route to transport the can. As described above, the can carrier can easily and automatically transport the can even if there is a change in the installation positions of the pre- and / or post-processing machines or the like in the factory.

The can carrier may further include an obstacle detecting section that detects an obstacle around the can carrier. In this case, the travelling route determining section determines the travelling route so as to avoid the obstacle detected by the obstacle detecting section. With this configuration, the can carrier can transport the can while avoiding various obstacles that are not included in the factory map.

In the above can carrier, when transporting the can containing the fiber bundle subjected to the pre-processing from the pre-processing machine to the post-processing machine, the travelling section may automatically exchange, upon reaching a transport destination position in the post-processing machine, the can present in the transport destination position with the transported can. With this configuration, the can carrier does not require the operator to replace the cans.

The can carrier may further include a quality acquiring section that acquires a quality of the fiber bundle contained in the can. In this case, the travelling route determining section changes a transport destination of the can according to the quality acquired by the quality acquiring section. With this configuration, in the can carrier, for example, an inferior can can be excluded from being subjected to the fiber processing step.

A fiber processing system according to another aspect of the present invention includes a pre-processing machine that performs a pre-processing on a fiber bundle; a post-processing machine that performs a post-processing on the fiber bundle on which the pre-processing has been performed; a can carrier that transports, by travelling in a factory in which the pre-processing machine and the post-processing machine are installed, a can containing the fiber bundle subjected to the pre-processing from a receiving destination position in the pre-processing machine to a transport destination position in the post-processing machine; and a carrier controlling device that controls the transport of the can by the can carrier. The post-processing machine transmits, to the carrier controlling device, a transport request signal requesting transport of the can containing the fiber bundle subjected to the pre-processing, and the carrier controlling device transmits, upon receiving the transport request signal, a transport instruction signal instructing the transport of the can to the can carrier. The can carrier includes a travelling section that transports the can by travelling in the factory; a map storage section that stores therein a factory map indicating an installation position of equipment in the factory including installation positions of the pre-processing machine and the post-processing machine; a travelling route determining section that determines, upon receiving the transport instruction signal transmitted from the carrier controlling device, based on the factory map, a travelling route for travelling from the receiving destination position in the pre-processing machine to the transport destination position in the post-processing machine; and a travelling control section that causes the travelling section to travel autonomously, when the travelling route has been determined by the travelling route determining section, based on the determined travelling route from the receiving destination position in the pre-processing machine to the transport destination position in the post-processing machine thereby transporting the can.

In this fiber processing system, the can travelling vehicle determines a travelling route for transporting the can based on the factory map. Therefore, even if there is a change in the installation positions of the pre- and / or post-processing machines or the like in the factory, it is only necessary for the can carrier to update the factory map and determine the travelling route according to the new positions of the pre- and / or post-processing machines and the like after the change, and the can carrier can travel autonomously based on the determined travelling route to transport the can. As described above, in the fiber processing system, even if there is a change in the installation positions of the pre- and / or post-processing machines or the like in the factory, the can can be easily and automatically transported with the can carrier. Also, the post-processing machine can cause the can to be carried by the can carrier by transmitting the can transport request signal requesting to transport the can.

In the fiber processing system, the post-processing machine includes a plurality of processing units that perform the post-processing on each of the fiber bundles in the plurality of cans containing the fiber bundle subjected to the pre-processing; a remaining amount managing section that manages a remaining amount of the fiber bundle in each can that is subjected to the post-processing by each processing unit; and a request controlling section that, when it is detected by the remaining amount managing section that the remaining amount of the fiber bundle in a specific can has become equal to or less than a predetermined reference remaining amount, specifies a specific processing unit that processes the fiber bundle in the specific can and includes processing unit specification information that specifies the specific processing unit in the transport request signal and transmits the transport request signal to the carrier controlling device. The carrier controlling device includes, upon receiving the transport request signal, the processing unit specification information in the transport instruction signal and transmits the transport instruction signal to the can carrier. The can carrier further includes a transport destination specifying section that, upon receiving the transport instruction signal including the processing unit specification information, determines the specific processing unit specified based on the processing unit specification information as the transport destination position in the post-processing machine. The travelling route determining section determines the travelling route going to the specific processing unit specified as the transport destination position by the transport destination specifying section. With this configuration, the can carrier can transport the can to the processing unit in which the remaining amount of the fiber bundle is equal to or less than the reference remaining amount.

In the fiber processing system, the carrier controlling device includes a plurality of pieces of the processing unit specification information in the transport instruction signal, and transmits the transport instruction signal to the can carrier. In the can carrier, the travelling section can transport a plurality of the cans, the transport destination specifying section specifies, based on the transport instruction signal including the plurality of pieces of the processing unit specification information, a plurality of the processing units specified by the plurality of pieces of the processing unit specification information as the transport destination position in the post-processing machine, and the travelling route determining section determines the travelling route that sequentially passes via the plurality of processing units specified as the transport destination position by the transport destination specifying section. With this configuration, the can carrier can sequentially transport the cans to the plurality of processing units in which the remaining amount of the fiber bundle is equal to or less than the reference remaining amount. As a result, in the fiber processing system, the cans can be efficiently transported to the plurality of processing units.

In the fiber processing system, the carrier controlling device includes in the transport instruction signal a transportation order of the cans along with the plurality of pieces of the processing unit specification information, and transmits the transport instruction signal to the can carrier, and the travelling route determining section of the can carrier determines the travelling route that sequentially passes via the plurality of processing units according to the transportation order included in the transport instruction signal. With this configuration, in the fiber processing system, the carrier controlling device can determine the transportation order of the can, and the can carrier can transport the can based on the determined transportation order.

In the fiber processing system, the post-processing machine may include a plurality of can stations for storing the can containing the fiber bundle subjected to the pre-processing, each can station is mapped with one or more processing unit. In this case, the transport destination specifying section of the can carrier determines, upon receiving the transport instruction signal including the processing unit specification information, the can station mapped with the processing unit specified based on the processing unit specification information as the transport destination position in the post-processing machine, and the travelling route determining section of the can carrier determines the travelling route that goes to the can station specified as the transport destination position by the transport destination specifying section. In this case, the can carrier does not directly transport the can to the processing unit, but can transport the can to the can station corresponding to the processing unit in which the remaining amount of the fiber bundle is equal to or less than the reference remaining amount.

In the fiber processing system, the pre-processing machine is provided in plurality and the post-processing machine is provided in plurality. In this case, the carrier controlling device, upon receiving the transport request signal from the post-processing machine, includes post-processing machine specification information that specifies the post-processing machine that requested the transport of the can and pre-processing machine specification information that specifies the pre-processing machine to be a receiving destination of the can among the plurality of pre-processing machines in the transport instruction signal, and transmits the transport instruction signal to the can carrier. The can carrier further includes a receiving destination specifying section that determines, upon receiving the transport instruction signal, the pre-processing machine specified based on the pre-processing machine specification information as the pre-processing machine to be the receiving destination of the can; and a transport destination specifying section that determines, upon receiving the transport instruction signal, the post-processing machine specified based on the post-processing machine specification information as the post-processing machine to be a transport destination of the can. The travelling route determining section determines the travelling route that goes from the receiving destination position in the pre-processing machine determined as the receiving destination by the receiving destination specifying section to the transport destination position in the post-processing machine determined as the transport destination by the transport destination specifying section. With this configuration, even if a plurality of pre-processing machines and a plurality of post-processing machines are provided, the fiber processing system can specify the pre-processing machine that is to serve as the receiving destination of can and specify the post-processing machine that is to serve as the transport destination of can, and the can carrier can transport the can.

In the fiber processing system, the carrier controlling device sets, as the pre-processing machine serving as the receiving destination of the can, the pre-processing machine for which at least one between a travel distance and a travel time from the pre-processing machine to the post-processing machine that requested the transport of the can is the shortest. With this configuration, the fiber processing system can cause the can carrier to transport the can along the shortest route or in the shortest time thereby improving the transport efficiency.

In the fiber processing system, the post-processing machine includes a first post-processing machine and a second post-processing machine, the carrier controlling device includes a mode selecting section that selects one of a first mode and a second mode based on a status of the transport request of the can from the first post-processing machine; and a transport instructing section that transmits to the can carrier a transport instruction signal for the first mode when the first mode is selected by the mode selecting section and transmits to the can carrier a transport instruction signal for the second mode when the second mode is selected by the mode selecting section. The transport instruction signal for the first mode is the transport instruction signal that causes the can carrier to transport the can to the transport destination position in the first post-processing machine, and the transport instruction signal for the second mode is the transport instruction signal that causes the can carrier to transport the can to the transport destination position in the second post-processing machine. With this configuration, the fiber processing system can change the post-processing machine serving as the transport destination of the can in the can carrier based on the status of the transport request of the can from the first post-processing machine. As a result, the fiber processing system can adjust the number of can carriers that are to transport the cans according to the status of the transport request issued by the post-processing machines thereby efficiently transporting the cans to the post-processing machines.

In the fiber processing system, the carrier controlling device may include a quality acquiring section that acquires quality information of the fiber bundle accommodated in the can. In this case, the transport destination of the can is changed according to the quality acquired by the quality acquiring section.

In the fiber processing system, the carrier controlling device transmits, when the quality acquired by the quality acquiring section is lower than a reference quality, the transport instruction signal to the can carrier instructing the can carrier to transport the can containing the fiber bundle of the inferior quality to an inferior-can storage place in the factory.

In the fiber processing system, the pre-processing machine may include a measuring section that measures the quality of the fiber bundle. In this case, the quality acquiring section of the carrier controlling device acquires the quality information from the measuring section.

In the fiber processing system, the pre-processing machine may be a drawing frame that performs a drawing processing on the fiber bundle as the pre-processing. In this case, the post-processing machine is an air-jet spinning frame that performs a spinning processing on the fiber bundle as the post-processing. According to this fiber processing system, in the spinning plant that produces the yarn (package) as the end product, the can can be transported from the drawing frame to the air-jet spinning frame without wastefully stopping (making wait) the operation of the air-jet spinning frame that is the key to determining the production pace.

In an air-jet spinning frame which is the post-processing machine constituting the fiber processing system according to still another aspect of the present invention, the air-jet spinning frame transmits the transport request signal to the carrier controlling device. In this air-jet spinning frame, the transport of can performed by the can carrier can be requested by transmitting the transport request signal.

A can transportation method implemented on a can carrier that travels inside a factory, in which a pre-processing machine that performs a pre-processing on a fiber bundle and a post-processing machine that performs a post-processing on the fiber bundle subjected to the pre-processing are installed, to transport a can that contains the fiber bundle between the pre-processing machine and the post-processing machine, according to still another aspect of the present invention includes determining, based on a factory map indicating an installation position of equipment in the factory including installation positions of the pre-processing machine and the post-processing machine, a travelling route for travelling from the pre-processing machine to the post-processing machine or from the post-processing machine to the pre-processing machine; and the can carrier autonomously travelling based on the determined travelling route thereby transporting the can between the pre-processing machine and the post-processing machine.

With the can transportation method, the travelling route for transporting the can is determined based on the factory map. Therefore, even if there is a change in the installation positions of the pre- and / or post-processing machines or the like in the factory, it is only necessary for the can carrier to update the factory map and determine the travelling route according to the new positions of the pre- and / or post-processing machines and the like after the change, and the can carrier can travel autonomously based on the determined travelling route to transport the can. As described above, with this can transportation method, even if there is a change in the installation positions of the pre- and / or post-processing machines or the like in the factory, the can can be easily and automatically transported with the can carrier.

A can transportation program executable on a can carrier that travels inside a factory, in which a pre-processing machine that performs a pre-processing on a fiber bundle and a post-processing machine that performs a post-processing on the fiber bundle subjected to the pre-processing are installed, to transport a can that contains the fiber bundle between the pre-processing machine and the post-processing machine, according to still another aspect of the present invention causes the can carrier to perform determining, based on a factory map indicating an installation position of equipment in the factory including installation positions of the pre-processing machine and the post-processing machine, a travelling route for travelling from the pre-processing machine to the post-processing machine or from the post-processing machine to the pre-processing machine; and the can carrier autonomously travelling based on the determined travelling route thereby transporting the can between the pre-processing machine and the post-processing machine.

With the can transportation program, the travelling route for transporting the can is determined by the computer based on the factory map. In this can transportation program, the travelling route for transporting the can is determined by the computer based on the factory map. Therefore, even if there is a change in the installation positions of the pre- and / or post-processing machines or the like in the factory, it is only necessary for the computer to update the factory map and determine the travelling route according to the new positions of the pre- and / or post-processing machines and the like after the change, and cause the can carrier to travel autonomously based on the determined travelling route to transport the can. As described above, with the can transportation program, even if there is a change in the installation positions of the pre- and / or post-processing machines or the like in the factory, the can can be easily and automatically transported with the can carrier.

A self-propelled can that travels inside a factory in which a pre-processing machine that performs a pre-processing on a fiber bundle and a post-processing machine that performs a post-processing on the fiber bundle subjected to the pre-processing are installed according to still another aspect of the present invention includes an accommodating section for accommodating the fiber bundle; a travelling section that travels in the factory; a map storage section that stores therein a factory map indicating an installation position of equipment in the factory including installation positions of the pre-processing machine and the post-processing machine; a travelling route determining section that determines, based on the factory map, a travelling route for travelling from the pre-processing machine to the post-processing machine or from the post-processing machine to the pre-processing machine; and a travelling control section that causes the travelling section to travel autonomously based on the determined travelling route. This self-propelled can itself can autonomously travel to transport the fiber bundle. Accordingly, even if there is a change in the installation positions of the pre- and / or post-processing machines and the like in the factory, the can can be transported automatically with the self-propelled can.

With the present invention, it is possible to easily and automatically transport a can even if there is a change in the installation positions of the pre- and / or post-processing machines or the like in a factory.

In the above explanation, the meaning of "a plurality of" also includes "a predetermined number of".

### BRIEF DESCRIPTION OF THE DRAWINGS

FIG. 1 is a block diagram of a configuration of a fiber processing system according to one embodiment.
FIG. 2 is a schematic view of an air-jet spinning frame shown in FIG. 1 when viewed from above.
FIG. 3 is a block diagram of a connection configuration between a carrier controlling device and each controlling device.
FIG. 4 is a block diagram of a unit controller.
FIG. 5 is a block diagram of the carrier controlling device.
FIG. 6 is a schematic diagram of a transport destination of a can carrier in an exception mode.
FIG. 7 is a block diagram of the can carrier.
FIG. 8 is a diagram of a can transportation program according to one embodiment.

### DETAILED DESCRIPTION

Exemplary embodiments of the present invention will be described in detail below with reference to the accompanying drawings. In the drawings, the same or corresponding elements have been denoted by the same reference symbols and duplicating description thereof has been omitted.

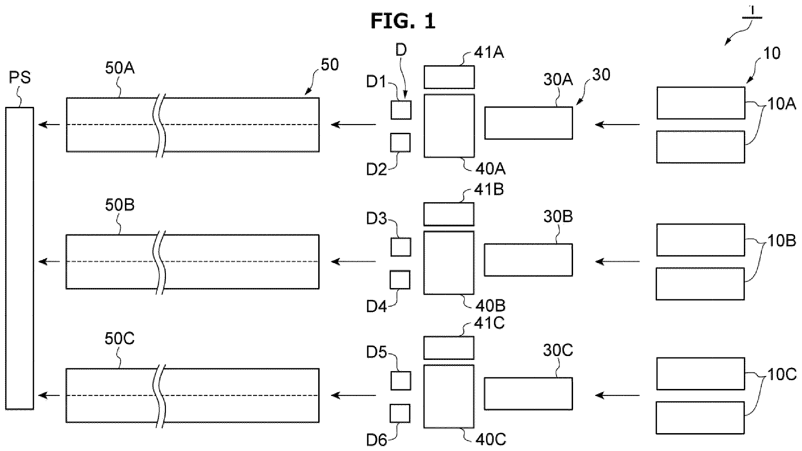

As shown in FIG. 1, a fiber processing system 1 according to one embodiment includes a plurality of carding machines 10, a plurality of drawing frames (pre-processing machines) 30, and a plurality of air-jet spinning frames (post-processing machine) 50, and a plurality of can carriers D.

The carding machine 10 performs carding on a lap produced by a blowing and scutching machine in a pre-processing of a carding processing to form a fiber bundle. For example, in the carding machine 10, a sheet-like lap is scraped with a comb to separate fibers to remove dust, short fibers, or the like contained in the lap. Thereafter, the carding machine 10 pulls the fibers remaining after the removal of the dust and short fibers in parallel, and collects those fibers and forms a string-like fiber bundle (carded sliver). The carding machine 10 includes a drafting device. The drafting device is arranged on the downstream side of the carding machine 10. The drafting device drafts the formed fiber bundle. The drafting device separates the fiber bundle to increase the parallelness of the fiber bundle. The carding machine 10 places the fiber bundle drafted in the drafting device in a can (for example, a cylindrical container). The fiber bundle drafted in the drafting device of the carding machine 10 is transported to the next step while being accommodated in the can.

The drawing frame 30 performs a drawing processing (pre-processing) on the fiber bundle formed in the carding machine 10. For example, in the drawing frame 30, six or eight fiber bundles are combined and drafted six times or eight times, and the fibers are straightened to remove an unevenness in a thickness of the fiber bundle. The drawing frame 30 places the drawn fiber bundle in a can K (container). The fiber bundle drawn in the drawing frame 30 is transported, while being accommodated in the can K, by the can carrier D to the air-jet spinning frame 50.

The pneumatic spinning frame 50 performs spinning processing (post-processing) on the fiber bundle drawn in the drawing frame 30 thereby forming a yarn. The pneumatic spinning frame 50 twists the fiber bundle drawn in the drawing frame 30 to form the yarn, and winds the yarn to form a package. The pneumatic spinning frame 50 is, for example, an air-jet spinning machine or an open-end spinning machine. The air-jet spinning machine includes a drafting section having a plurality of drafting roller pairs. The drafting section twists the fiber bundle by the action of a swirling air current to form the yarn. The open-end spinning machine separates fibers of the fiber bundle by using a combing roller, or by the action of an air current, and twists the fibers while collecting the fibers to form the yarn.

This fiber processing system 1 realizes a fiber processing method that includes the carding step for forming the fiber bundle by using the carding machine 10, a drawing step for drawing the fiber bundle formed at the carding step by using the drawing frame 30, and an air spinning step for spinning the fiber bundle drawn at the drawing step by using the air-jet spinning frame 50.

In the fiber processing system 1, the fiber bundle that is formed in the carding machine 10 and supplied to the air-jet spinning frame 50 passes through the drawing frame 30 only once (one pass). That is, the drawing frame 30 of the fiber processing system 1 has a so-called one-pass configuration. In the fiber processing system 1, the fiber bundles formed by two carding machines 10 are supplied to one drawing frame 30, and the fiber bundle drawn by one drawing frame 30 is supplied to one air-jet spinning frame 50.

The fiber processing system 1 can include a sliver lapping device that performs a sliver lapping step, and a combing machine that performs a combing step. When the fiber processing system 1 includes the sliver lapping device and the combing machine, the fiber processing method further includes the sliver lapping step and the combing step. In the sliver lapping step, 18 to 24 string-like fiber bundles formed in the carding machine 10 are wound into a single sheet to form a sliver lap. In the combing step, the sliver lap formed in the sliver lapping device is combed with a comb to remove dust and short fibers therefrom, and the remaining fibers are made parallel to form a uniform fiber bundle. The fiber bundle formed at the combing step is supplied to the drawing frame 30.

The fiber processing system 1 can include, instead of the air-jet spinning frame 50, a roving frame that performs a roving step, a ring spinning frame that performs a spinning step, and an automatic winder that performs a rewinding step. When the fiber processing system 1 includes these three devices, the fiber processing method includes, instead of the air spinning step, the roving step, the spinning step, and the rewinding step. In the roving step, a roved yarn is formed by using the roving frame from the fiber bundle drawn at the drawing step. In the spinning step, the ring spinning frame forms a yarn from the roved yarn formed at the roving step. In the rewinding step, the yarn formed at the spinning step is wound by the automatic winder to form the package.

In the fiber processing system 1, the carding machine 10 includes the drafting device. However, the drafting device may not be provided in the carding machine 10. The fiber processing system 1 has, as mentioned above, the one-pass configuration in which the fiber bundle passes through the drawing frame 30 once. However, the fiber processing system 1 can have a two-pass configuration in which the fiber bundle passes through the drawing frame 30 twice, or can have a three-or-more-pass configuration in which the fiber bundle passes through the drawing frame 30 three or more times.

In the fiber processing system 1 of this embodiment, as the plurality of carding machines 10, two first carding machines 10A, two second carding machines 10B, and two third carding machines 10C are provided. As the plurality of drawing frames 30, a first drawing frame 30A, a second drawing frame 30B, and a third drawing frame 30C are provided. As the plurality of can carriers D, a first can carrier D1 to a sixth can carrier D6 are provided. As the plurality of air-jet spinning frames 50, a first air-jet spinning frame 50A, a second air-jet spinning frame 50B, and a third air-jet spinning frame 50C are provided.

In the fiber processing system 1 of this embodiment, the fiber bundle formed in each of the two first carding machines 10A is transported, while being accommodated in the can, to the first drawing frame 30A. The fiber bundle drawn in the first drawing frame 30A is temporarily stored, in the state of being accommodated in a can, in a first full-can station 40A provided in the first drawing frame 30A. Note that, when transporting the fiber bundles from the first carding machines 10A to the first drawing frame 30A, it is not necessary that the fiber bundles are transport in the cans. For example, the fiber bundles can be transported by using a transporting apparatus such as a belt conveyor.

The can stored in the first full-can station 40A is transported to the first air-jet spinning frame 50A by the first can carrier D1 or the second can carrier D2. Moreover, the first can carrier D1 or the second can carrier D2 transports an empty can from the first air-jet spinning frame 50A to a first empty-can station 41A provided in the first drawing frame 30A. The first full-can station 40A and the first empty-can station 41A may be provided separately from each other, or may be provided integrally. The fact that the first full-can station 40A and the first empty-can station 41A are provided in the first drawing frame 30A does not necessarily mean that the first full-can station 40A and the first empty-can station 41A are arranged near the first drawing frame 30A. For example, as long as the first full-can station 40A and the first empty-can station 41A are associated with the first drawing frame 30A, the first full-can station 40A and the first empty-can station 41A and the first drawing frame 30A can be arranged at mutually separated locations.

A package formed in the first air-jet spinning frame 50A is transported to a package station PS. Thus, the two first carding machines 10A, the one first drawing frame 30A, the first can carrier D1 and the second can carrier D2, and the one first air-jet spinning frame 50A constitute a yarn processing group that forms the yarn from the fiber bundle.

Similarly, the two second carding machines 10B, the one second drawing frame 30B, the third can carrier D3 and the fourth can carrier D4, and the one second air-jet spinning frame 50B constitute another yarn processing group that forms the yarn from the fiber bundle. Like the first drawing frame 30A, the second drawing frame 30B is provided with a second full-can station 40B and a second empty-can station 41B. A package formed in the second air-jet spinning frame 50B is transported to the package station PS.

Similarly, the two third carding machines 10C, the one third drawing frame 30C, the fifth can carrier D5 and the sixth can carrier D6, and the one third air-jet spinning frame 50C constitute yet another yarn processing group that forms the yarn from the fiber bundle. Like the first drawing frame 30A, the third drawing frame 30C is provided with a third full-can station 40C and a third empty-can station 41C. A package formed in the third air-jet spinning frame 50C is transported to the package station PS.

Thus, the fiber processing system 1 includes three yarn processing groups that separately form the yarn from the fiber bundle. However, the number of yarn processing groups is not limited to three, and this number can be other than three. Also, the numbers of the carding machine 10, the drawing frame 30, the air-jet spinning frame 50, and the can carrier D in each yarn processing group are not limited to the above-mentioned numbers. It is allowable to increase or decrease the numbers depending on the processing capability of each device. Different yarn processing groups may form different types of yarns or may form the same type of yarns. The three yarn processing groups described above have the same configuration. Therefore, in the following explanation, mainly, the yarn processing group that includes the two first carding machines 10A, the one first drawing frame 30A, the one first air-jet spinning frame 50A, and the first can carrier D1 and the second can carrier D2 will be explained in detail.

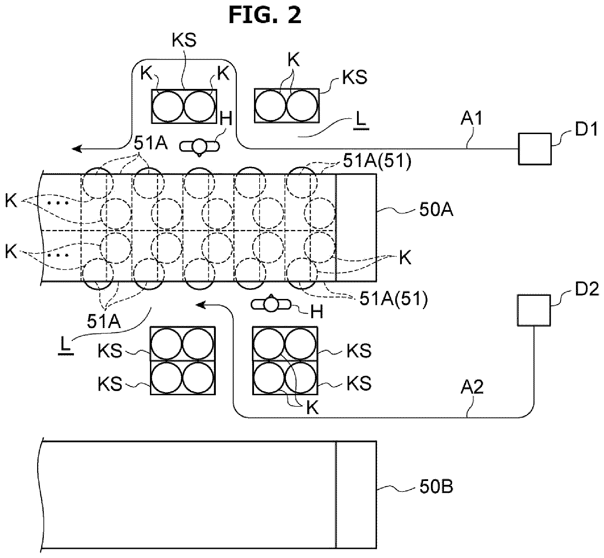

As shown in FIG. 2, the first air-jet spinning frame 50A includes a plurality of spinning units (processing units) 51A. The spinning unit 51A performs a spinning processing on the fiber bundle that has been subjected to the drawing processing and that is contained in the can. As an example, the first air-jet spinning frame 50A includes 100 units of the spinning unit 51A. However, the number of spinning units 51A is not limited to 100. The spinning units 51A are arranged in two rows. The spinning units 51A in one row and the spinning units 51A in the other row are arranged such that the back sides of these units face each other. That is, each spinning unit 51A is accessible from the front side of the spinning unit 51A. Further, a passage L is provided around each of the first air-jet spinning frame 50A to the third air-jet spinning frame 50C.

A worker H stands in the passage L when replacing the can K in the spinning unit 51A. The spinning unit 51A of this embodiment includes a can placement area in a lower part of the spinning unit 51A. The can K can be placed in this can placement area. The spinning unit 51A pulls out the fiber bundle upwards from the can K placed in the can placement area and forms the yarn from this fiber bundle. The can K in the present embodiment is a cylindrical container. As shown in FIG. 2, the diameter of the can K is larger than a width of one spinning unit 51A. For this reason, as shown in FIG. 2, the cans K are arranged in a staggered manner in a direction of alignment of each row of the spinning units 51A. However, if the cans K having the diameter smaller than the width of spinning unit 51A are used, the cans K may not be arranged in the staggered manner. It is not necessary that the cans K are cylindrical containers. For example, the cans K can be box shaped. Even when the cans K are box-shaped containers or the like, the containers can be arranged in the staggered manner depending on the size of the cans K.

When the fiber bundle is pulled out from the can K by the spinning unit 51A, the can K becomes empty or the amount of the fiber bundle drops below a reference remaining amount. When this happens, the worker H replaces this can K, which is present in the can placement area of the spinning unit 51A, with another can K (a full can that contains the fiber bundle) that has been stored in a can station KS.

The first air-jet spinning frame 50A is provided with a plurality of can stations KS for temporarily storing therein the cans K that contain the fiber bundle drawn in the first drawing frame 30A. One can station KS is associated with a plurality of spinning units 51A. In the present embodiment, one can station KS is associated with four spinning units 51A. The can station KS is provided in the passage L at a position facing a front side of the associated spinning unit 51A. In the present embodiment, each can station KS can store two cans K.

The can K in which the fiber bundle is accommodated by the first drawing frame 30A (hereinafter, may be called "full can K") is transported by the first can carrier D1 or the second can carrier D2 from the first full-can station 40A to the can station KS associated with the first air-jet spinning frame 50A. The can K from which the fiber bundle has been pulled out by the spinning unit 51A (hereinafter, may be called "empty can K") is transported by the first can carrier D1 or the second can carrier D2 from the can station KS to the first empty-can station 41A.

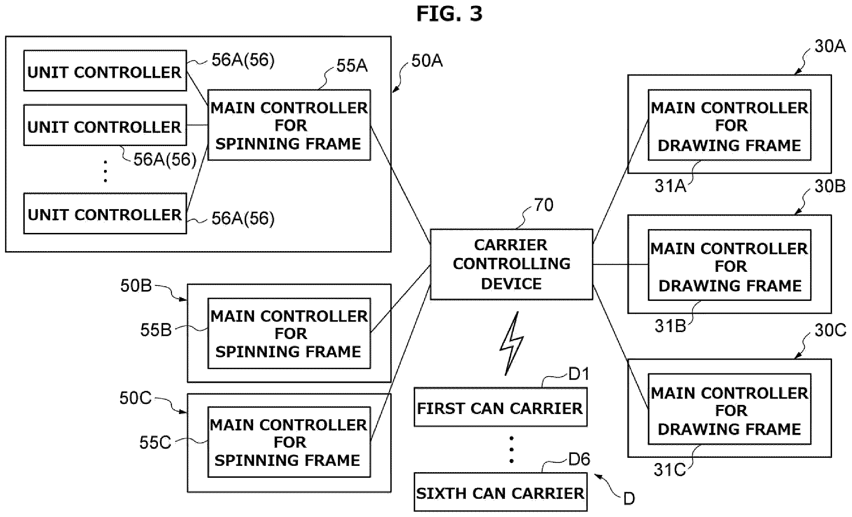

A configuration of each section / device will be described while focusing on a transportation processing of the can K performed between the drawing frame 30 and the air-jet spinning frame 50. As shown in FIG. 3, the fiber processing system 1 includes a carrier controlling device 70 that controls the travel of the first can carrier D1 to the sixth can carrier D6.

The first air-jet spinning frame 50A includes a plurality of unit controllers 56A that controls the operation of the spinning units 51A. In this embodiment, one unit controller 56A is provided per a plurality of spinning units 51A. However, one unit controller 56A may be provided per spinning unit 51A. The carrier controlling device 70 can communicate with each unit controller 56A via a main controller for spinning frame 55A that controls an overall operation of the first air-jet spinning frame 50A. Similarly, the carrier controlling device 70 can communicate with a unit controller that controls an operation of the spinning units of the second air-jet spinning frame 50B via a main controller for spinning frame 55B of the second air-jet spinning frame 50B. Similarly, the carrier controlling device 70 can communicate with a unit controller that controls an operation of the spinning units of the third air-jet spinning frame 50C via a main controller for spinning frame 55C of the third air-jet spinning frame 50C. The communication between the carrier controlling device 70 and the main controllers for spinning frames 55A to 55C may be wired communication or wireless communication.

In the following explanation, the unit controllers 56A of the first air-jet spinning frame 50A and the unit controllers of the second air-jet spinning frame 50B and the third air-jet spinning frame 50C may be collectively referred to as "unit controllers 56". Moreover, the spinning units 51A of the first air-jet spinning frame 50A and the spinning units of the second air-jet spinning frame 50B and the third air-jet spinning frame 50C may be collectively referred to as "spinning units 51".

The carrier controlling device 70 can communicate with a main controller for drawing frame 31A provided in the first drawing frame 30A, a main controller for drawing frame 31B provided in the second drawing frame 30B, and a main controller for drawing frame 31C provided in the third drawing frame 30C. The communication between the carrier controlling device 70 and the main controllers for drawing frames 31A to 31C may be wired communication or wireless communication. Furthermore, the carrier controlling device 70 can perform wireless communication with the first can carrier D1 to the sixth can carrier D6.

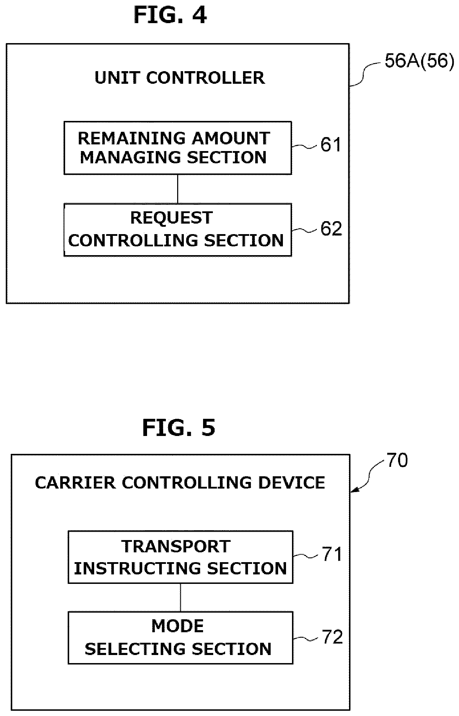

The unit controller 56A will be described below in detail. As shown in FIG. 4, the unit controller 56A includes, as functional sections, a remaining amount managing section 61 and a request controlling section 62 in addition to functional sections that control the spinning operation of the spinning units 51A. Like the unit controller 56A, the unit controllers 56 of the second air-jet spinning frame 50B and the third air-jet spinning frame 50C are also provided with the remaining amount managing section 61 and the request controlling section 62.

The remaining amount managing section 61 manages a remaining amount of fiber bundle in each can K subjected to the spinning processing in the plurality of spinning units 51A controlled by the unit controller 56A. The remaining amount managing section 61 can manage the remaining amount of fiber bundle in the can K by using various methods. For example, the remaining amount managing section 61 calculates a use amount and a use efficiency of the fiber bundle in the spinning unit 51A, and further, acquires an initial storage amount of the fiber bundle (amount of the fiber bundle in the full can) in the can K that has been installed in the spinning unit 51A. It is allowable that the remaining amount managing section 61 predicts that the fiber bundle will be exhausted (fully consumed) after a predetermined time (for example, 5 minutes) based on the use amount, the use efficiency, and the initial storage amount of the fiber bundle.

The use amount and the use efficiency of the fiber bundle may be calculated based on a rotation amount of a transporting roller that transports the fiber bundle pulled out of the can K, or in response to a command signal or the like from a driving motor that rotates the transporting roller. The initial storage amount of the fiber bundle can be obtained, for example, from the carrier controlling device 70 that controls the transport of the can K, or can be obtained by reading from an information tag attached to the can K. Also, the remaining amount managing section 61 can include a detecting section that detects the remaining amount of the fiber bundle in the can K. It is allowable that the detecting section detects that the amount of the fiber bundle has dropped below a predetermined amount (for example, the amount that the fiber bundle will be fully consumed after 5 minutes), or that the fiber bundle in the can K is fully consumed.

Based on the remaining amount of the fiber bundle managed by the remaining amount managing section 61, the unit controller 56A terminates the spinning processing before the spinning unit 51A completes the spinning processing by pulling out the entire fiber bundle from the can K. That is, the unit controller 56A stops the spinning processing while the fiber bundle is slightly hanging from the spinning unit 51A. As a result, when the cans K are exchanged, it is possible to easily join the fiber bundle in the new can K and the fiber bundle hanging from the spinning unit 51A.

The request controlling section 62 transmits to the carrier controlling device 70 a transport request signal requesting transport of the can K (full can) in which the fiber bundle subjected to the drawing processing has been stored. More specifically, when the remaining amount managing section 61 detects that the remaining amount of the fiber bundle has become equal to or less than a predetermined reference remaining amount, the request controlling section 62 transmits to the carrier controlling device 70 the transport request signal that contains processing unit specification information that specifies the spinning unit 51A that processes the fiber bundle in the can K whose remaining amount is equal to or less than the reference remaining amount. Accordingly, the carrier controlling device 70 can grasp to which spinning unit 51A among the plurality of spinning units 51A of the first air-jet spinning frame 50A the full can K should be transported. Thus, the request controlling section 62 transmits the transport request signal to the carrier controlling device 70 before the can K becomes empty. However, it is allowable that the request controlling section 62 transmits the transport request signal to the carrier controlling device 70 when the can K has become empty.

The carrier controlling device 70 will be described below in detail by using FIG. 5. The carrier controlling device 70 controls the transport of the can K by the first can carrier D1 to the sixth can carrier D6. In the following explanation, a configuration by which the carrier controlling device 70 controls the first can carrier D1 and the second can carrier D2 will be mainly described. The carrier controlling device 70 includes, as functional sections, a transport instructing section 71 and a mode selecting section 72. Upon receiving the transport request signal from the request controlling section 62 of the unit controller 56A, the transport instructing section 71 transmits to the first can carrier D1 or the second can carrier D2 a transport instruction signal that instructs the transport of the can K. More specifically, upon receiving the transport request signal from the request controlling section 62 of the unit controller 56A, the carrier controlling device 70 transmits to the first can carrier D1 or the second can carrier D2 the transport instruction signal that contains the processing unit specification information that specifies the spinning unit 51A in the first air-jet spinning frame 50A.

The processing unit specification information included in the transport request signal is the processing unit specification information included in the transport request signal and transmitted from the request controlling section 62 of the unit controller 56A. Accordingly, the first can carrier D1 or the second can carrier D2 can grasp to which spinning unit 51A the full can K should be transported. That is, the processing unit specification information specifies the transport destination of the full can K. It is allowable that the processing unit specification information includes, for example, a frame number of the first air-jet spinning frame 50A and a unit number of the spinning unit 51A.

It is possible that a plurality of transport request signals is transmitted at the same time, and it may be necessary to transport the full cans K to a plurality of spinning units 51A. When this happens, the transport instructing section 71 includes a plurality of pieces of the processing unit specification information in the transport instruction signal and transmits this signal to the first can carrier D1 and / or the second can carrier D2. In this case, the transport instructing section 71 includes, in the transport instruction signal, the plurality of pieces of the processing unit specification information and a transportation order of the full cans K, and transmits this signal to the first can carrier D1 and / or the second can carrier D2. In this manner, the processing unit specification information indicating the transport destination of the full can K, and when there is a plurality of transport destinations, the transportation order are at least included in the transport instruction signal transmitted to the first can carrier D1 and the second can carrier D2.

Note that, upon receiving the transport request signal from the unit controller 56A, the transport instructing section 71 determines which one of the first can carrier D1 and the second can carrier D2 should be the transmission destination of the transport instruction signal, for example, by using the method explained below. The transport instructing section 71 can make this determination based on, for example, the positions of the first can carrier D1 and the second can carrier D2, the position of the spinning unit 51A that requested the full can K, the request time (transmission time) of each transport request signal, and information relating to operating state (which can carrier is available for use, the time until the can carrier becomes available next) or the like of the first can carrier D1 and the second can carrier D2. For example, the transport instructing section 71 determines, based on the above information, the transmission destination such that various conditions, such that the travel distance of the first can carrier D1 and the second can carrier D2 is the shortest, the travel time of the first can carrier D1 and the second can carrier D2 is the shortest, the operation efficiency of the first can carrier D1 and the second can carrier D2 becomes high, and the like, are satisfied. It is preferable that the transport instructing section 71 determines a target to which the transport instruction signal is to be transmitted such that both the travel distance and the travel time become shortest. However, when the target for which the travel distance is the shortest and the target for which the travel time is the shortest are different, it is preferable to select the target with the shortest travel time with priority. For example, assume that there are a straight travelling route and a curved travelling route and the travel distance of both these routes is the same. However, because the can carrier usually slows down at a curve, in this example, even if the maximum travel speed of the can carrier is the same, the travel time for the curved route will be longer. Thus, depending on the shape of the travelling route, there may be cases where the order based on the travel distance and the order based on the travel time do not match. In such a case, it is preferable to give priority to the travel time over the travel distance and to select the target for which the travel time is the shortest. The various information and conditions for determining the target to which the transport instruction signal should be transmitted are exemplary, and it is not limited to make this determination based on these. Also, it is allowable that the transport instructing section 71 obtains from the main controller for drawing frame 31A the number of full cans K stored in the first full-can station 40A, and transmits the transport instruction signal based on the number of full cans K.

In a normal case, the first can carrier D1 and the second can carrier D2 transports the full cans K to the one first air-jet spinning frame 50A. However, for example, depending on the status of the transport request of the full can K with respect to each spinning unit 51A of the first air-jet spinning frame 50A, a longer time may be required if only the first can carrier D1 and the second can carrier D2 are to handle all the transport requests. On the other hand, for example, it may be possible that the other can carriers D, such as the third can carrier D3, can be used for this purpose. In this case, the carrier controlling device 70 causes the other can carrier D to transport the full can K thereby going beyond the framework of the yarn processing group. The mode selecting section 72 performs a processing for determining and the like of the transportation of the full can K that goes beyond the framework of the yarn processing group.

Hereinafter, depending on the transport status of the full can K in the spinning unit 51A of the first air-jet spinning frame 50A, an example in which at least one of the third can carrier D3 and the fourth can carrier D4 is used to transport the full can K to the first air-jet spinning frame 50A is explained. The mode selecting section 72 selects a normal mode (first mode) or an exception mode (second mode) based on the status of the transport request of the full can K from the spinning unit 51A of the first air-jet spinning frame 50A.

The normal mode is a mode in which the full can K is transported without going beyond the framework of the yarn processing group. That is, the transport instruction signal in the normal mode is a signal that causes the first can carrier D1 and the second can carrier D2 to transport the full cans K to the spinning units 51A of the first air-jet spinning frame 50A, and causes the third can carrier D3 and the fourth can carrier D4 to transport the full cans K to the spinning unit 51 of the second air-jet spinning frame 50B (first post-processing machine). That is, the first can carrier D1 and the second can carrier D2 and the third can carrier D3 and the fourth can carrier D4 transport the full cans K to the textile machines of the same type (same processing), that is, to the first air-jet spinning frame 50A and the second air-jet spinning frame 50B.

The exception mode is a mode in which the full cans K are transported with going beyond the framework of the yarn processing groups. That is, the transport instruction signal in the exception mode is a transport instruction signal that causes the full cans K to be transported to the spinning units 51A of the first air-jet spinning frame (second post-processing machine) 50A by, in addition to the first can carrier D1 and the second can carrier D2, also at least one of the third can carrier D3 and the fourth can carrier D4.

For example, the mode selecting section 72 can select the exception mode when, as the status of the transport request of the full can K from the spinning unit 51A of the first air-jet spinning frame 50A, the number of transport requests simultaneously issued is equal to or higher than a predetermined number. For example, the mode selecting section 72 can select the exception mode when, as the status of the transport request of the full can K from the spinning unit 51A of the first air-jet spinning frame 50A, a time duration until the transportation of the full cans K by the first can carrier D1 and the second can carrier D2 for all the transport requests from the spinning units 51A is completed is equal to or longer than a predetermined time. However, it is allowable that the mode selecting section 72 selects the normal mode or the exception mode based on a status other than the statuses described above as long as it represents a status of the transport request of the full can K from the spinning unit 51A of the first air-jet spinning frame 50A.

When the normal mode is selected by the mode selecting section 72, the transport instructing section 71 transmits the transport instruction signal for the normal mode to the first can carrier D1 to the fourth can carrier D4.

When the exception mode is selected by the mode selecting section 72, the transport instructing section 71 transmits the transport instruction signal for the exception mode to the first can carrier D1 to the fourth can carrier D4. Specifically, the transport instructing section 71 transmits the transport instruction signal including processing unit specification information that specifies the spinning unit 51A of the first air-jet spinning frame 50A to at least one of the third can carrier D3 and the fourth can carrier D4 to cause at least one of the third can carrier D3 and the fourth can carrier D4 to transport the full can K to the specified spinning unit 51A of the first air-jet spinning frame 50A.

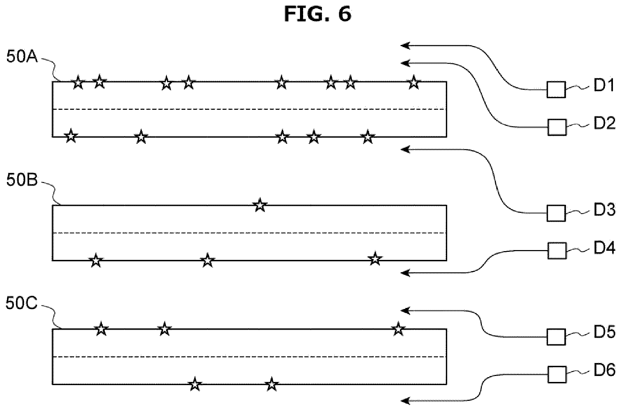

When the exception mode has been selected, it is allowable that the transport instructing section 71 determines, based on the status of the transport request of the full can K from the spinning unit 51A of the first air-jet spinning frame 50A, whether the full can K is to be transported to the first air-jet spinning frame 50A by the third can carrier D3 or the fourth can carrier D4, or the full cans K are to be transported to the first air-jet spinning frame 50A by both the third can carrier D3 and the fourth can carrier D4. For example, it is allowable that the transport instructing section 71 determines, based on the positions of the third can carrier D3 and the fourth can carrier D4, whether the full can K is to be transported to the first air-jet spinning frame 50A by the third can carrier D3 or the fourth can carrier D4 or the full cans K are to be transported to the first air-jet spinning frame 50A by both the third can carrier D3 and the fourth can carrier D4. For example, it is allowable that the transport instructing section 71 determines, based on information relating to operating status of the third can carrier D3 and the fourth can carrier D4, whether the full can K is to be transported to the first air-jet spinning frame 50A by the third can carrier D3 or the fourth can carrier D4 or the full cans K are to be transported to the first air-jet spinning frame 50A by both the third can carrier D3 and the fourth can carrier D4. Accordingly, for example, as shown in FIG. 6, the carrier controlling device 70 causes the first can carrier D1 to the third can carrier D3 to transport the full cans K to the first air-jet spinning frame 50A, and causes the fourth can carrier D4 to transport the full cans K to the second air-jet spinning frame 50B. A star symbol in FIG. 6 indicates a position of the spinning unit 51 that issued the transport request of the full can K, because, the remaining amount of the fiber bundle therein dropped below the reference remaining amount.

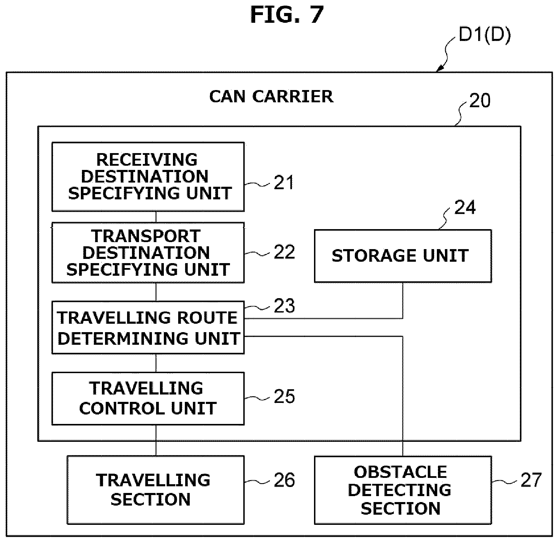

The can carrier D will be described below in detail by using FIG. 7. The first can carrier D1 will be described as a representative of the can carriers. The second can carrier D2 to the sixth can carrier D6 have the same configuration as the first can carrier D1. The first can carrier D1 autonomously travels inside a factory (fiber factory) in which the fiber processing system 1 is installed to transport the cans K between the first drawing frame 30A and the first air-jet spinning frame 50A. Such autonomous travelling includes automatically determining the travelling route to the transport destination of the can K and the first can carrier D1 automatically travelling while following the determined travelling route. The first can carrier D1 transports the full can K from the first drawing frame 30A to the first air-jet spinning frame 50A. The first can carrier D1 transports the empty can K from the first air-jet spinning frame 50A to the first drawing frame 30A.

Specifically, the first can carrier D1 receives the full can K from the first full-can station 40A. That is, a position of the first full-can station 40A is a receiving destination position of the full can K in the first drawing frame 30A.

The first can carrier D1 transports the received full can K to a transport destination position that is a position of the first air-jet spinning frame 50A. In the present embodiment, the transport destination position of the full can K is, among the positions of the plurality of can stations KS provided in the first air-jet spinning frame 50A, the position of the can station KS associated with the spinning unit 51A that issued the transport request of the full can K. The first can carrier D1 receives the empty can K from the can station KS after delivering the full can K. The first can carrier D1 transports the received empty can K to the first empty-can station 41A.

The first can carrier D1 transports the can K by travelling on the can transport road in the factory. There are no tracks (rails or the like) for guiding the travelling of the can carrier D on the can transport road. The first can carrier D1 can move freely inside the factory. However, for example, it is allowable to prepare a track for guiding the travelling of the can carrier D on a part of the can transport road in the factory at places where the travelling position of the can carrier D needs to be restricted or the like.

Specifically, as shown in FIG. 7, the first can carrier D1 includes an arithmetic section 20, a travelling section 26, and an obstacle detecting section 27. Like the first can carrier D1, the second can carrier D2 to the sixth can carrier D6 also include the arithmetic section 20, the travelling section 26, and the obstacle detecting section 27.

The travelling section 26 transports the can K between the first drawing frame 30A and the first air-jet spinning frame 50A by travelling inside the factory. The travelling section 26 can simultaneously transport a plurality of cans K (for example, three cans). The can K is coupled to the travelling section 26, or the can K is placed in / on the travelling section 26. When the travelling section 26 travels in this state, the can K is transported together with the travelling section 26. The travelling section 26 can automatically receive the full can K at the position of the first full-can station 40A that is the receiving destination position of the full can K. Alternatively, the worker can couple the full can K to the travelling section 26 or can place the full can K in / on the travelling section 26.

The travelling section 26 can automatically deliver the transported full can K at the position of the can station KS that is the transport destination position of the full can K. Alternatively, the worker can perform an operation to deliver the full can K at the position of the can station KS. After delivering the full can K, the travelling section 26 can automatically receive the empty can K from the can station KS. Alternatively, the worker can couple the empty can K to the travelling section 26 or can place the empty can K in / on the travelling section 26 from the can station KS. Thus, it is preferable that the travelling section 26, upon reaching the can station KS, can automatically exchange the empty can K present in the can station KS with the transported full can K.

After receiving the empty can K, the travelling section 26 can automatically deliver the empty can K to the first empty-can station 41A. Alternatively, the worker can perform an operation to deliver the empty can K to the first empty-can station 41A.

The obstacle detecting section 27 detects whether any obstacle is present around the first can carrier D1. Various known detecting devices, such as a sensor that uses a laser beam, can be used as the obstacle detecting section 27. The obstacle includes, for example, the worker H (see FIG. 2) who may be doing some work on the passage L or the like.

The arithmetic section 20 performs various processes for causing the travelling section 26 to travel autonomously. The arithmetic section 20 is a computer that includes, for example, a processor (for example, CPU [Central Processing Unit]) that executes an operating system, an application program, and the like, a storage unit constituted by ROM [Read Only Memory], RAM [Random Access Memory], a hard disk, and the like, and a communication control unit constituted by a network card or a wireless communication module. The storage unit of the arithmetic section 20 stores therein data or a database necessary for various processing. The unit controller 56A (56) and the carrier controlling device 70 are also provided with a computer that is similar to the computer of the arithmetic section 20, and the various functional sections thereof are realized by this computer.

The arithmetic section 20 includes, as functional sections, a receiving destination specifying unit 21, a transport destination specifying unit 22, a travelling route determining unit 23, a storage unit (map storage unit) 24, and a travelling control unit 25.

Upon receiving the transport instruction signal from the carrier controlling device 70, the receiving destination specifying unit 21 specifies the receiving destination position of the full can K in the first drawing frame 30A. In the present embodiment, the receiving destination position of the full can K in each can carrier D is preset. Specifically, the receiving destination position of the full can K in the first can carrier D1 is the position of the first full-can station 40A. Therefore, the receiving destination specifying unit 21 specifies the position of the first full-can station 40A as the receiving destination position of the full can K.

Upon receiving the transport instruction signal from the carrier controlling device 70, the transport destination specifying unit 22 specifies the transport destination position of full can K in the first air-jet spinning frame 50A. The transport destination specifying unit 22 specifies the position of the spinning unit 51A specified based on the processing unit specification information included in the transport instruction signal as the transport destination position. When the transport instruction signal includes a plurality of pieces of the processing unit specification information, the transport destination specifying unit 22 specifies the positions of a plurality of spinning units 51A specified based on the processing unit specification information as the transport destination positions. In the present embodiment, the transport destination specifying unit 22 specifies the position of the can station KS associated with the spinning unit 51A specified based on the processing unit specification information as the transport destination position in the first air-jet spinning frame 50A.

As described above, when the normal mode has been selected by the mode selecting section 72, the spinning unit 51 that is not beyond the framework of the yarn processing group is set as the transport destination position of the full can K. On the other hand, when the exception mode has been selected by the mode selecting section 72, the position of the spinning unit 51 that is beyond the framework of the yarn processing group is set as the transport destination position of the full can K. For this reason, when the exception mode has been selected, the transport destination specifying unit 22 of the first can carrier D1 can set, as the transport destination position, the position of the spinning unit 51 (can station KS) that is provided in the second air-jet spinning frame 50B or the third air-jet spinning frame 50C other than the first air-jet spinning frame 50A.

The storage unit 24 stores therein a factory map indicating the installation positions of various facilities in the factory including the installation positions of the drawing frame 30 and the air-jet spinning frame 50. Also, in this factory map, the installation positions of the first full-can station 40A to the third full-can station 40C, the first empty-can station 41A to the third empty-can station 41C, each can station KS, the spinning units provided in each air-jet spinning frame 50, and the like are included. This map information is updated, for example, when the installation position of a device in the factory is changed.

Upon receiving the transport instruction signal transmitted from the carrier controlling device 70, the travelling route determining unit 23 determines, based on the factory map stored in the storage unit 24, the travelling route from the receiving destination position of the full can K in the first drawing frame 30A to the transport destination position in the first air-jet spinning frame 50A. The receiving destination position of the full can K is the position specified by the receiving destination specifying unit 21, and in the present embodiment, it is the position of the first full-can station 40A. The transport destination position of the full can K is the position specified by the transport destination specifying unit 22, and in the present embodiment, it is the position of the can station KS associated with the spinning unit 51A specified based on the processing unit specification information.

That is, the travelling route determining unit 23 determines the travelling route from the first full-can station 40A up to the can station KS. Moreover, the travelling route determining unit 23 determines a travelling route that avoids any obstacles detected by the obstacle detecting section 27. Note that, the travelling route determining unit 23 can determine the travelling route at any time based on the factory map stored in the storage unit 24. That is, the travelling route determining unit 23 determines the travelling route from the current position of the first can carrier D1 up to the transport destination position even while the first can carrier D1 is travelling according to the factory map and the position of the obstacle detected by the obstacle detecting section 27. The first can carrier D1 may have a position detecting section for detecting its own position inside the factory. Alternatively, when the carrier controlling device 70 manages the travelling position of the can carrier D, the first can carrier D1 can acquire its own position from the carrier controlling device 70. Various known methods can be used for determining the travelling route to the transport destination position so as to avoid the obstacle.

For example, in FIG. 2 is shown with an arrow A1 the travelling route of the first can carrier D1 that avoids the worker H, detected by the obstacle detecting section 27 of the first can carrier D1, and the can station KS. Similarly, an arrow A2 shows the travelling route of the second can carrier D2 that avoids the worker H, detected by the obstacle detecting section 27 of the second can carrier D2, and the can station KS.

When no can K is present in a certain can station KS, the travelling route determining unit 23 can determine the travelling route so as to bypass (not stop) that can station KS in which the can K is absent. It is allowable that the first can carrier D1 detects the presence or absence of the can K in the can station KS by using the obstacle detecting section 27.

Note that, when the positions of a plurality of can stations KS are specified as the transport destination positions by the transport destination specifying unit 22, the travelling route determining unit 23 determines a travelling route that sequentially passes by the specified can stations KS. In this case, the travelling route determining unit 23 determines the travelling route that sequentially passes by the can stations KS associated with the spinning units 51A in an order in accordance with the transportation order included in the transport instruction signal.

After receiving the empty can K from the can station KS, the travelling route determining unit 23 determines the travelling route for transporting the empty can K to the first empty-can station 41A based on the factory map and the detection result obtained in the obstacle detecting section 27.

The travelling control unit 25 transports the can K between the first drawing frame 30A and the first air-jet spinning frame 50A by causing the travelling section 26 to travel autonomously based on the travelling route determined by the travelling route determining unit 23. Specifically, the travelling control unit 25 can cause the first can carrier D1 to transport the full can K to the can station KS by causing the travelling section 26 to travel autonomously from the first full-can station 40A to the can station KS based on the travelling route. Also, the travelling control unit 25 can cause the first can carrier D1 to transport the empty can K to the first empty-can station 41A by causing the travelling section 26 to travel autonomously from the can station KS to the first empty-can station 41A based on the travelling route.

Next, a can transportation method performed by the can carrier D will be described. Upon receiving the transport instruction signal from the carrier controlling device 70, the travelling route determining unit 23 performs a travelling route determination processing (travelling route determination step) to determine the travelling route. In the travelling route determination processing, the travelling route determining unit 23 determines the travelling route for transporting the full can K from the drawing frame 30 to the air-jet spinning frame 50 based on the factory map stored in the storage unit 24. The travelling route determining unit 23 determines the travelling route (travelling route determination step) so as to avoid any obstacle based on the detection result obtained in the obstacle detecting section 27. The travelling control unit 25 performs a transportation processing (transportation step) for transporting the full can K from the drawing frame 30 to the air-jet spinning frame 50 by causing the travelling section 26 to travel autonomously based on the determined travelling route.

Also, the travelling route determining unit 23 performs the travelling route determination processing (travelling route determination step) to determine the travelling route for transporting the empty can K from the air-jet spinning frame 50 to the drawing frame 30 based on the factory map stored in the storage unit 24. The travelling route determining unit 23 determines the travelling route (travelling route determination step) so as to avoid any obstacle based on the detection result obtained in the obstacle detecting section 27. The travelling control unit 25 performs the transportation processing (transportation step) for transporting the empty can K from the air-jet spinning frame 50 to the drawing frame 30 by causing the travelling section 26 to travel autonomously based on the determined travelling route.

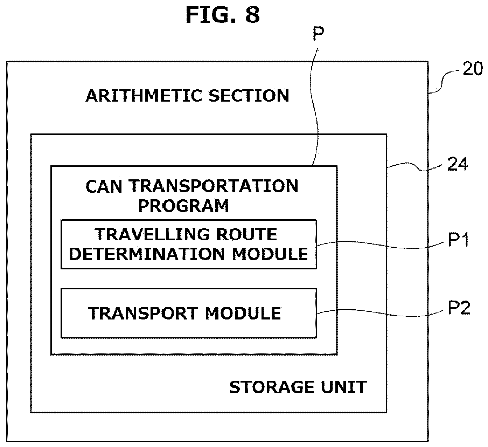

As shown in FIG. 8, a can transportation program P is stored in the storage unit 24 of the arithmetic section 20. The storage unit 24 is a non-transitory computer readable storage medium that stores therein the can transportation program P. The arithmetic section 20 performs the can transportation method in the can carrier D by loading the can transportation program P on a processor and executing the can transportation program P. The can transportation program P includes a travelling route determination module P1 and a transport module P2. The processing realized by causing the computer to execute the travelling route determination module P1 and the transport module P2 is similar to the travelling route determination processing performed at the travelling route determination step and the transportation processing performed at the transportation step, respectively. The can transportation program P can be provided while being permanently recorded on, for example, a tangible recording medium such as a CD-ROM, a DVD-ROM, or a semiconductor memory. Alternatively, the can transportation program P can be provided as a data signal via a communication network.

As described above, by using the can carrier D, the fiber processing system 1, the air-jet spinning frame 50, the can transportation method, and the can transportation program P, the travelling route for transporting the can K is determined based on the factory map. Therefore, in the can carrier D and the like, even if there is a change in the installation position of the pre- and / or post-processing machines or the like in the factory, it is only necessary to update the factory map, and the travelling route according to the new installation position of the pre- and / or post-processing machines and the like after the change can be determined and the can carrier D can be caused to travel autonomously based on the determined travelling route to transport the can K. As described above, in the can carrier D and the like, even if there is a change in the installation position of the pre- and / or post-processing machines and the like in the factory, automatic transportation of the can K can be easily performed. Also, the air-jet spinning frame 50 can cause the can carrier D to transport the full can K by transmitting a can transport request signal that requests the transport of the full can K.

The travelling route determining unit 23 of the can carrier D determines the travelling route so as to avoid any obstacle detected by the obstacle detecting section 27. In this case, the can carrier D can transport the can K while avoiding various obstacles that are not included in the factory map.

The can carrier D can automatically exchange the can K present at the transport destination position with the transported can K while transporting the can K. In this case, it is not necessary for the worker to manually replace the can.

The request controlling section 62 includes in the transport request signal the processing unit specification information, which is used for specifying the spinning unit 51 that is processing the fiber bundle in the can whose remaining amount is less than or equal to the reference remaining amount, and transmits the transport request signal to the carrier controlling device 70. As a result, the can carrier D can transport the full can K to the spinning unit 51 in which the remaining amount of the fiber bundle is equal to or less than the reference remaining amount.

The travelling route determining unit 23 of the can carrier D determines the travelling route that sequentially passes by the plurality of spinning units 51 when the positions of the plurality of spinning units 51 are specified as the transport destination positions by the transport destination specifying unit 22. In this case, the can carrier D can sequentially transport the full can K to the plurality of spinning units 51 in which the remaining amount of the fiber bundle is equal to or less than the reference remaining amount. As a result, in the fiber processing system 1, the full can K can be efficiently transported to the plurality of spinning units 51. The travelling route determining unit 23 determines the travelling route that sequentially passes by the plurality of spinning units 51 in accordance with the transportation order included in the transport instruction signal. For this reason, in the fiber processing system 1, the carrier controlling device 70 can determine the transportation order of the cans, and the can carrier D can transport the full cans K based on the determined transportation order.

The air-jet spinning frame 50 is provided with a plurality of can stations KS for storing therein the full can K. The spinning units 51 and the can stations KS are mapped with each other. The travelling route determining unit 23 of the can carrier D determines the travelling route that goes to the can station KS corresponding to the spinning unit 51 that is the transport destination. In this case, the can carrier D does not directly transport the full can K to the spinning unit 51, but can transport the full can K to the can station KS corresponding to the spinning unit 51 in which the remaining amount of the fiber bundle is equal to or less than the reference remaining amount K.

The carrier controlling device 70 selects the normal mode or the exception mode based on the status of the transport request of the can K from the spinning unit 51 of the air-jet spinning frame 50. The exception mode is a mode for transporting the full can K beyond the framework of the yarn processing group. Thus, since the normal mode and the exception mode can be selected as desired, the fiber processing system 1 can cause the can carrier D to transport the full can K with going beyond the framework of the yarn processing group based on the status of the transport request of the full can K. In this way, the fiber processing system 1 can adjust the number of can carriers D used to transport the full can K according to the status of the transport request from the spinning unit 51, and can efficiently transport the full can K to the spinning unit 51.

Although the present invention has been described above, the present invention is not limited to the above embodiments. For example, the carrier controlling device 70 can freely combine the drawing frame 30 that receives the full can K and the air-jet spinning frame 50 that serves as the transport destination of the full can K according to various situations and instructs the can carrier D to perform the transportation. Specifically, upon receiving the transport request signal that requests the transport of the full can K from the air-jet spinning frame 50, the carrier controlling device 70 includes, in the transport instruction signal, post-processing machine specification information that specifies the spinning unit 51 of the air-jet spinning frame 50 that requested the transport of the full can K and pre-processing machine specification information that specifies the drawing frame 30 that serves as a receiving destination of the full can K, and transmits the transport instruction signal to the can carrier D. Upon receiving the transport instruction signal, the can carrier D specifies, by using the receiving destination specifying unit 21, the drawing frame 30 specified based on the pre-processing machine specification information as the receiving destination drawing frame 30 of the full can K. Moreover, the can carrier D specifies, by using the transport destination specifying unit 22, the spinning unit 51 of the air-jet spinning frame 50 specified based on the post-processing machine specification information as the spinning unit 51 of the air-jet spinning frame 50 as the transport destination of the full can K. The travelling route determining unit 23 determines the travelling route that goes from the receiving destination position (first full-can station 40A to the third full-can station 40C) in the drawing frame 30 specified as the receiving destination to the can station KS corresponding to the spinning unit 51 of the air-jet spinning frame 50 specified as the transport destination. As the can carrier D transports the full can K based on this travelling route, the full can K can be carried with a high degree of freedom going beyond the framework of the yarn processing group. As described above, even when the plurality of drawing frames 30 and the plurality of air-jet spinning frames 50 are provided, the full can K can be transported by the can carrier D by specifying the drawing frame 30 serving as the receiving destination of the full can K and the spinning unit 51 of the air-jet spinning frame 50 serving as the transport destination of the full can K.

Note that, when transporting the full can K beyond the framework of the yarn processing group, the carrier controlling device 70 can determine from which drawing frame 30 the full can K is to be received and to which air-jet spinning frame 50 the full can K is to be transported, and by which can carrier D the full can K is to be transported, for example, by the method explained below. The carrier controlling device 70 can make this determination based on, for example, the position of each can carrier D, the position of the spinning unit 51 that requested the full can K, the request time (transmission time) of each transport request signal, information relating to operation status of each can carrier D (which can carrier is available for use, the time until the can carrier becomes available next), the number of the full cans K stored in the first full-can station 40A to the third full-can station 40C, the factory map, and the like. Also, the carrier controlling device 70 can make this determination based on information on the type of the yarn to be formed. For example, when the transport request of the full can K is made, it is allowable that the carrier controlling device 70 sets, as the drawing frame 30 to be the receiving destination of the full can K, the drawing frame 30 for which at least one of the travel distance and the travel time for travelling from the drawing frame 30 up to the spinning unit 51 of the air-jet spinning frame 50 that requested the transport of the full can K is the shortest. That is, the carrier controlling device 70 can set the drawing frame 30 for which at least one of the travel distance and the travel time from the drawing frame 30 up to the spinning unit 51 of the air-jet spinning frame 50 that issued the transport request is the shortest. Note that, it is preferable that the carrier controlling device 70 selects the drawing frame 30 for which both the travel distance and the travel time are the shortest. However, if the drawing frame 30 for which the travel distance is the shortest is different from the drawing frame 30 for which the travel time is the shortest, it is preferable to select the drawing frame 30 for which the travel time is the shortest and set this drawing frame 30 as the receiving destination. For example, it is allowable that the carrier controlling device 70 determines a combination of the drawing frame 30, the air-jet spinning frame 50, and the can carrier D that satisfies various conditions such that the operation efficiency of the can carrier D becomes high. Note that, the various information and conditions for determining the combination of the drawing frame 30, the air-jet spinning frame 50, and the can carrier D described above are exemplary, and the present invention is not limited to these.

The can carrier D may not have a configuration that allows a plurality of cans K to be transported simultaneously. Moreover, the can carrier D may be incorporated into the can K. That is, the can (self-propelled can) K in which the can carrier D is incorporated is the can K that travels autonomously. Specifically, this autonomously travelling can K transports the fiber bundle between the drawing frame 30 and the air-jet spinning frame 50 by travelling in the factory (fiber factory) in which the fiber processing system 1 has been installed. Such an autonomously travelling can K includes, in addition to an accommodating unit for accommodating the fiber bundle, the travelling route determining unit 23, the storage unit 24, the travelling control unit 25, and the travelling section 26 that are included in the can carrier D as described above. Note that, such a can K can also include the receiving destination specifying unit 21, the transport destination specifying unit 22, and the obstacle detecting section 27 that are included in the can carrier D. Accordingly, the autonomously travelling can K can autonomously travel between the drawing frame 30 and the air-jet spinning frame 50 in the same manner as the can carrier D. With such an autonomously travelling can K, automatic transportation of the can K becomes easy even if there is a change in the installation position of the pre- and / or post-processing machines and the like in the factory.

It is mentioned that the can carrier D transports the full can K to the can station KS corresponding to the spinning unit 51; however, it is allowable that the can carrier D transports the full can K directly to the spinning unit 51. When this configuration is adopted, the can carrier D may have a mechanism for automatically joining the fiber bundle in the transported full can K to the fiber bundle remaining in the spinning unit 51. Moreover, the can carrier D may be provided with a notifying section for requesting the worker to join the fiber bundles. For example, the can carrier D may perform lighting of a lamp, display on a display screen, output of sound from a speaker, or the like as a notification for requesting to join the fiber bundles.

The transport destination of full can K (can) can be changed based on the quality of the fiber bundle contained in the can K.

For example, an inferior-can storage place can be prepared in the factory. And, if the quality of the fiber bundle contained in the can K is less than a predetermined reference quality, the inferior-can storage place can be set as the transport destination of this can K. On the other hand, when the quality of the fiber bundle in the can K meets the reference quality, as described above, the air-jet spinning frame 50 (transport destination position of the post-processing machine) can be set as the transport destination of this can K.

In this manner, by changing the transport destination depending on the quality of the fiber bundle, it is possible to automatically eliminate an inferior can (can containing an inferior fiber bundle) from the fiber processing step (a sequence of spinning). As a result, it is possible to prevent performing the spinning with an inferior quality fiber bundle. Also, the burden of transporting the inferior can can be eliminated.

Moreover, for example, a plurality of quality levels (preferably, at least 3 levels) can be prepared in advance as the quality level of the fiber bundle. For example, three quality levels of grade A level, grade B level, and grade C level can be prepared in advance.

In this example, it is assumed that the grade A level is higher in quality than the grade B level, and the grade B level is higher in quality than the grade C level. The grade C level is a level lower than the reference quality, and the grade A level and the grade B level are levels satisfy the reference quality. Moreover, at least one of the plurality of air-jet spinning frames can be set as an air-jet spinning frame for spinning the grade B level yarn (form a grade B level package), or at least one spinning unit among the plurality of spinning units included in one air spinning machine can be set as the spinning unit for spinning the grade B level yarn (form a grade B level package).

The can carrier D transports the can K containing the grade C level fiber bundle to the inferior-can storage place. Moreover, the can carrier D transports the can K containing the grade B level fiber bundle to the air-jet spinning frame or the spinning unit set for the grade B level. Furthermore, the can carrier D transports the can K containing the grade A level fiber bundle to the air-jet spinning frame or the spinning unit (other than that set for the grade B level) that is not set for the grade B level.

The can carrier D can include a labeling device that can affix to the can K a label indicating that the fiber bundle contained in the can K is of the inferior quality. Upon determining that the quality of the fiber bundle contained in the can K is lower than the reference quality set in advance, the can carrier D can cause the labeling device to affix the label to this can K while transporting the can K up to the inferior-can storage place or after placing the can K in the inferior-can storage place. With this technique, the worker can visually recognize that the can K that is intentionally separated from the fiber processing step is an inferior can. Moreover, it is possible to prevent that the inferior can is erroneously returned to the fiber processing step by the worker.

It is preferable that the quality information of the fiber bundle put in the can K by the drawing frame 30 is obtained (for example, measured) by the drawing frame 30 (pre-processing machine). That is, it is preferable that the drawing frame 30 includes a measuring section that measures the quality of the fiber bundle. Also, it is preferable to transmit the quality information of the fiber bundle contained in the can K from the drawing frame 30 to the carrier controlling device 70. That is, the carrier controlling device 70 includes a quality acquiring section that acquires the quality information of the fiber bundle contained in the can K. The carrier controlling device 70 changes the transport destination of the can K according to the quality acquired by the quality acquiring section. If the quality acquired by the quality acquiring section is less than the reference quality, the carrier controlling device 70 transmits the transport instruction signal to the can carrier instructing that the can K containing the fiber bundle of a quality lower than the reference quality is transported to the inferior-can storage place. The quality acquiring section of the carrier controlling device 70 obtains the quality information from the measuring section of the drawing frame 30.

With this configuration, when the carrier controlling device 70 also receives the quality information of the fiber bundle from the drawing frame 30, it is possible to automatically eliminate the inferior can.

Alternatively, the can carrier D can have a quality measuring section (quality acquiring section) that can measure the quality of the fiber bundle contained in the can K. It is preferable that the quality measuring section of the can carrier D measures the quality of the fiber bundle contained in the can K, for example, when receiving the can K. If the quality of the fiber bundle contained in the can K is lower than the reference quality, the transport destination of this can K can be changed to the inferior-can storage place even if the air-jet spinning frame has been specified by the carrier controlling device 70 as the transport destination.

The can carrier D can collect in a batch a plurality of empty cans K in the air-jet spinning frame 50 at a predetermined timing. It is allowable that the can carrier D is capable of being switched between an autonomous travelling mode and a manual travelling mode. In the autonomous travelling mode, the can carrier D travels autonomously based on the travelling route determined as described above. In the manual travelling mode, the can carrier D travels when operated by the worker. In this configuration, the travelling modes can be switched according to various situations, for example, the mode can be switched to the manual travelling mode when the can carrier D travels in a narrow place.

The can carrier D is not limited to the one that transports the can K between the drawing frame 30 and the air-jet spinning frame 50. The can carrier D can transport a can or the like between other processing machines. Also, for example, when there is no transport request for transporting to the air-jet spinning frame 50 the full can K, or the like, it is allowable that the can carrier D performs some other operation, other than transporting the can K between the drawing frame 30 and the air-jet spinning frame 50. For example, the can carrier D can transport various objects between the other processing machines (for example, between the carding machine 10 and the drawing frame 30, between the air-jet spinning frame 50 and the post-processing machine of the air-jet spinning frame 50, or the like). The can carrier D can transport the package formed by the air-jet spinning frame 50. The can carrier D can include a cleaning mechanism that cleans the can transport road, and the can carrier D can clean the can transport road by travelling autonomously. The can carrier D may be capable of being switched between a transport mode and a non-transport mode. In the transport mode, the can K is transported. In the non-transport mode, other operation, other than transporting the can K (for example, cleaning of the can transport road or the like), is performed.

The configuration of the fiber processing system 1 shown in FIG. 1 is exemplary, and the number of the carding machine 10, the drawing frame 30, the air-jet spinning frame 50, and the can carrier D is not limited to the numbers mentioned above. For example, when the normal mode has been selected, the full can K is transported by both the can carriers D to one air-jet spinning frame 50; however, the full can K can be transported by the can carriers D of the number that is different from two. The number of the air-jet spinning frames 50 arranged per drawing frame 30 depends on the number of the spinning units 51 of the air-jet spinning frame 50. The numbers of the drawing frame 30 and the air-jet spinning frame 50 are set according to the respective capabilities of these devices. Also, one full-can station can be provided for a plurality of drawing frames 30. The arrangement of the carding machine 10, the drawing frame 30, the air-jet spinning frame 50, and the can carrier D is not limited to the arrangement shown in the drawings. Also, one full-can station can be mapped as the transport destination of the full can K for two air-jet spinning frames 50. In the air-jet spinning frame 50, the spinning units 51 are not limited to being arranged in two rows such that the back sides thereof face each other. The spinning units 51 can be arranged in a single row. Moreover, the configuration of the spinning unit 51 is not limited to the configuration in which the can placement area, in which the can K is placed, is arranged in the lower part of the spinning unit 51. The can placement area, in which the can K is placed, can be arranged on the back side or on the front side of the spinning unit 51.

The carrier controlling device 70 is not limited to the one that transmits to the can carrier D the transport instruction signal containing the transportation order of the full can K. When the transportation order is not included in the transport instruction signal, the travelling route determining unit 23 of the can carrier D can determine the transportation order that sequentially passes by the can stations KS corresponding to the plurality of spinning units 51, and determines the travelling route that travels following this order.

The carrier controlling device 70 need not be a controlling device dedicated to the can carrier D. As long as the management and the control of the can carrier D are possible, the carrier controlling device 70 can be replaced with another controlling device. For example, the carrier controlling device 70 may be configured by a central management computer that manages the entire fiber processing system 1 in the factory. Moreover, for example, the carrier controlling device 70 may be configured by an upper controlling apparatus that manages the operations of the plurality of air-jet spinning frames 50 or an upper controlling apparatus that manages the operations of the plurality of drawing frames 30. The connection configuration of the devices shown in FIG. 3 is exemplary. For example, the carrier controlling device 70 can be communicably connected to the upper controlling apparatus that manages the operations of the plurality of air-jet spinning frames 50. Moreover, for example, the carrier controlling device 70 can be communicably connected to the upper controlling apparatus that manages the operations of the plurality of drawing frames 30.

The arrangement of the can stations KS and the like shown in FIG. 2 is exemplary. For example, it is not limited to the configuration shown in FIG. 2 whether one can station KS is provided for every spinning unit 51. For example, when one can station KS is arranged for less number (spinning unit 51), the distance between the spinning unit 51 and the can station KS becomes shorter and also the replacement work by the worker between the can station KS and the spinning unit 51 becomes easy. The can station KS may be shared by adjacent air-jet spinning frames 50. The number of cans K that can be stored in the can station KS can be a number other than two. The arrangement of the can station KS is not limited to the configuration shown in FIG. 2. For example, if there is a large space between adjacent can stations KS, it is possible to increase the degree of freedom of the travelling route of the can carrier D. However, because the surface area required to perform the air spinning step increases as the space between the can stations KS increases, it is preferable to set the space between the can stations KS in consideration of this surface area. It is allowable to define rules for transporting the can K by the can carrier D or rules for operation by the worker such that the can station KS does not always become full (that is, there is an empty space in the can station KS) with the cans K (full cans or empty cans). In this case, the can carrier D can travel to the transport destination via a shorter travelling route through the empty space between the can stations KS or through the empty space between the cans K in the can station KS. Also, the can carrier D can be temporarily evacuated to the empty space between the can stations KS or in the empty space between the cans K in the can station KS.

It is allowable that the drawing frame 30 has a display for displaying which spinning unit 51 of the air-jet spinning frame 50 has issued the transport request of the full can K (to which spinning unit 51 the full can K should be transported).

Also, at least a portion of the embodiments described above and various modifications may be combined as desired.

## Claims

1. A can carrier (D) that travels inside a factory, in which a pre-processing machine (30) that performs a pre-processing on a fiber bundle and a post-processing machine (50) that performs a post-processing on the fiber bundle subjected to the pre-processing are installed, to transport a can (K) that contains the fiber bundle between the pre-processing machine (30) and the post-processing machine (50), the can carrier (D) comprising:
a travelling section (26) that transports the can (K) by travelling in the factory;
a map storage section (24) that stores therein a factory map indicating an installation position of equipment in the factory including installation positions of the pre-processing machine (30) and the post-processing machine (50);
a travelling route determining section (23) that determines, based on the factory map, a travelling route for travelling from the pre-processing machine (30) to the post-processing machine (50) or from the post-processing machine (50) to the pre-processing machine (30); and
a travelling control section (25) that causes the travelling section (26) to travel autonomously based on the determined travelling route thereby transporting the can (K) between the pre-processing machine (30) and the post-processing machine (50).

2. The can carrier (D) as claimed in Claim 1, further comprising an obstacle detecting section (27) that detects an obstacle around the can carrier (D),
wherein the travelling route determining section (23) determines the travelling route so as to avoid the obstacle detected by the obstacle detecting section (27).

3. The can carrier (D) as claimed in Claim 1 or 2, wherein, when transporting the can (K) containing the fiber bundle subjected to the pre-processing from the pre-processing machine (30) to the post-processing machine (50), the travelling section (26) automatically exchanges, upon reaching a transport destination position in the post-processing machine (50), the can (K) present in the transport destination position with the transported can (K).

4. The can carrier (D) as claimed in any one of Claims 1 to 3, further comprising a quality acquiring section that acquires a quality of the fiber bundle contained in the can (K),
wherein the travelling route determining section (23) changes a transport destination of the can (K) according to the quality acquired by the quality acquiring section.

5. A fiber processing system (1) comprising:
a pre-processing machine (30) that performs a pre-processing on a fiber bundle;
a post-processing machine (50) that performs a post-processing on the fiber bundle on which the pre-processing has been performed;
a can carrier (D) that transports, by travelling in a factory in which the pre-processing machine (30) and the post-processing machine (50) are installed, a can (K) containing the fiber bundle subjected to the pre-processing from a receiving destination position in the pre-processing machine (30) to a transport destination position in the post-processing machine (50); and
a carrier controlling device (70) that controls the transport of the can (K) by the can carrier (D), wherein
the post-processing machine (50) transmits, to the carrier controlling device (70), a transport request signal requesting transport of the can (K) containing the fiber bundle subjected to the pre-processing,
the carrier controlling device (70) transmits, upon receiving the transport request signal, a transport instruction signal instructing the transport of the can (K) to the can carrier (D), and
the can carrier (D) includes
a travelling section (26) that transports the can (K) by travelling in the factory;
a map storage section (24) that stores therein a factory map indicating an installation position of equipment in the factory including installation positions of the pre-processing machine (30) and the post-processing machine (50);
a travelling route determining section (23) that determines, upon receiving the transport instruction signal transmitted from the carrier controlling device (70), based on the factory map, a travelling route for travelling from the receiving destination position in the pre-processing machine (30) to the transport destination position in the post-processing machine (50); and
a travelling control section (25) that causes the travelling section (26) to travel autonomously, when the travelling route has been determined by the travelling route determining section (23), based on the determined travelling route from the receiving destination position in the pre-processing machine (30) to the transport destination position in the post-processing machine (50) thereby transporting the can (K),
wherein
the pre-processing machine (30) is preferably provided in plurality,
the post-processing machine (50) is preferably provided in plurality,
the carrier controlling device (70), upon receiving the transport request signal from the post-processing machine (50), preferably includes post-processing machine specification information that specifies the post-processing machine (50) that requested the transport of the can (K) and pre-processing machine specification information that specifies the pre-processing machine (30) to be a receiving destination of the can (K) among the plurality of pre-processing machines (30) in the transport instruction signal, and preferably transmits the transport instruction signal to the can carrier (D),
the can carrier (D) preferably includes
a receiving destination specifying section (21) that determines, upon receiving the transport instruction signal, the pre-processing machine (30) specified based on the pre-processing machine specification information as the pre-processing machine (30) to be the receiving destination of the can (K); and
a transport destination specifying section (22) that determines, upon receiving the transport instruction signal, the post-processing machine (50) specified based on the post-processing machine specification information as the post-processing machine (50) to be a transport destination of the can (K), and
the travelling route determining section (23) preferably determines the travelling route that goes from the receiving destination position in the pre-processing machine (30) determined as the receiving destination by the receiving destination specifying section (21) to the transport destination position in the post-processing machine (50) determined as the transport destination by the transport destination specifying section (22), or
wherein
the post-processing machine (50) preferably includes a first post-processing machine (50B) and a second post-processing machine (50A),
the carrier controlling device (70) preferably includes
a mode selecting section (72) that selects one of a first mode and a second mode based on a status of the transport request of the can (K) from the first post-processing machine (50B); and
a transport instructing section (71) that transmits to the can carrier (D) a transport instruction signal for the first mode when the first mode is selected by the mode selecting section (72) and transmits to the can carrier (D) a transport instruction signal for the second mode when the second mode is selected by the mode selecting section (72), and
the transport instruction signal for the first mode is preferably the transport instruction signal that causes the can carrier (D) to transport the can (K) to the transport destination position in the first post-processing machine (50B), and
the transport instruction signal for the second mode is preferably the transport instruction signal that causes the can carrier (D) to transport the can (K) to the transport destination position in the second post-processing machine (50A).

6. The fiber processing system (1) as claimed in Claim 5, wherein the post-processing machine (50) includes
a plurality of processing units (51) that perform the post-processing on each of the fiber bundles in the plurality of cans (K) containing the fiber bundle subjected to the pre-processing;
a remaining amount managing section (61) that manages a remaining amount of the fiber bundle in each can (K) that is subjected to the post-processing by each processing unit (51); and
a request controlling section (62) that, when it is detected by the remaining amount managing section (61) that the remaining amount of the fiber bundle in a specific can (K) has become equal to or less than a predetermined reference remaining amount, specifies a specific processing unit (51) that processes the fiber bundle in the specific can (K) and includes processing unit specification information that specifies the specific processing unit (51) in the transport request signal and transmits the transport request signal to the carrier controlling device (70), wherein
the carrier controlling device (70) includes, upon receiving the transport request signal, the processing unit specification information in the transport instruction signal and transmits the transport instruction signal to the can carrier (D),
the can carrier (D) further includes a transport destination specifying section (22) that, upon receiving the transport instruction signal including the processing unit specification information, determines the specific processing unit (51) specified based on the processing unit specification information as the transport destination position in the post-processing machine (50), and
the travelling route determining section (23) determines the travelling route going to the specific processing unit (51) specified as the transport destination position by the transport destination specifying section (22).

7. The fiber processing system (1) as claimed in Claim 6, wherein
the carrier controlling device (70) includes a plurality of pieces of the processing unit specification information in the transport instruction signal, and transmits the transport instruction signal to the can carrier (D), and
in the can carrier (D)
the travelling section (26) can transport a plurality of the cans (K),
the transport destination specifying section (22) specifies, based on the transport instruction signal including the plurality of pieces of the processing unit specification information, a plurality of the processing units (51) specified by the plurality of pieces of the processing unit specification information as the transport destination position in the post-processing machine (50), and
the travelling route determining section (23) determines the travelling route that sequentially passes via the plurality of processing units (51) specified as the transport destination position by the transport destination specifying section (22),
wherein
the carrier controlling device (70) preferably includes in the transport instruction signal a transportation order of the cans (K) along with the plurality of pieces of the processing unit specification information, and preferably transmits the transport instruction signal to the can carrier (D), and
the travelling route determining section (23) of the can carrier (D) preferably determines the travelling route that sequentially passes via the plurality of processing units (51) according to the transportation order included in the transport instruction signal.

8. The fiber processing system (1) as claimed in any one of Claims 6 to 7, wherein
the post-processing machine (50) includes a plurality of can stations (KS) for storing the can (K) containing the fiber bundle subjected to the pre-processing,
each can station (KS) is mapped with one or more processing unit (51),
the transport destination specifying section (22) of the can carrier (D) determines, upon receiving the transport instruction signal including the processing unit specification information, the can station (KS) mapped with the processing unit (51) specified based on the processing unit specification information as the transport destination position in the post-processing machine (50), and
the travelling route determining section (23) of the can carrier (D) determines the travelling route that goes to the can station (KS) specified as the transport destination position by the transport destination specifying section (22).

9. The fiber processing system (1) as claimed in Claim 5, wherein
the carrier controlling device (70) sets, as the pre-processing machine (30) serving as the receiving destination of the can (K), the pre-processing machine (30) for which at least one between a travel distance and a travel time from the pre-processing machine (30) to the post-processing machine (50) that requested the transport of the can (K) is the shortest.

10. The fiber processing system (1) as claimed in any one of Claims 5 to 9, wherein the carrier controlling device (70) includes a quality acquiring section that acquires quality information of the fiber bundle accommodated in the can (K), and
the transport destination of the can (K) is changed according to the quality acquired by the quality acquiring section,
wherein the carrier controlling device (70) preferably transmits, when the quality acquired by the quality acquiring section is lower than a reference quality, the transport instruction signal to the can carrier (D) instructing the can carrier (D) to transport the can containing the fiber bundle of the inferior quality to an inferior-can storage place in the factory.

11. The fiber processing system (1) as claimed in Claim 10, wherein the pre-processing machine (30) includes a measuring section that measures the quality of the fiber bundle, and
the quality acquiring section of the carrier controlling device (70) acquires the quality information from the measuring section.

12. The fiber processing system (1) as claimed in any one of Claims 5 to 10, wherein the pre-processing machine (30) is a drawing frame that performs a drawing processing on the fiber bundle as the pre-processing, and
the post-processing machine (50) is an pneumatic spinning frame that performs a spinning processing on the fiber bundle as the post-processing.

13. An pneumatic spinning frame (50) which is the post-processing machine (50) constituting the fiber processing system (1) according to any one of Claims 5 to 10, wherein
the pneumatic spinning frame (50) transmits the transport request signal to the carrier controlling device (70).

14. A can transportation method implemented on a can carrier (D) that travels inside a factory, in which a pre-processing machine (30) that performs a pre-processing on a fiber bundle and a post-processing machine (50) that performs a post-processing on the fiber bundle subjected to the pre-processing are installed, to transport a can (K) that contains the fiber bundle between the pre-processing machine (30) and the post-processing machine (50), the can transportation method comprising:
determining, based on a factory map indicating an installation position of equipment in the factory including installation positions of the pre-processing machine (30) and the post-processing machine (50), a travelling route for travelling from the pre-processing machine (30) to the post-processing machine (50) or from the post-processing machine (50) to the pre-processing machine (30); and
the can carrier (D) autonomously travelling based on the determined travelling route thereby transporting the can (K) between the pre-processing machine (30) and the post-processing machine (50).

15. A can transportation program (P) executable on a can carrier (D) that travels inside a factory, in which a pre-processing machine (30) that performs a pre-processing on a fiber bundle and a post-processing machine (50) that performs a post-processing on the fiber bundle subjected to the pre-processing are installed, to transport a can (K) that contains the fiber bundle between the pre-processing machine (30) and the post-processing machine (50), thereby causing the can carrier (D) to perform:
determining, based on a factory map indicating an installation position of equipment in the factory including installation positions of the pre-processing machine (30) and the post-processing machine (50), a travelling route for travelling from the pre-processing machine (30) to the post-processing machine (50) or from the post-processing machine (50) to the pre-processing machine (30); and
the can carrier (D) autonomously travelling based on the determined travelling route thereby transporting the can (K) between the pre-processing machine (30) and the post-processing machine (50).

16. A self-propelled can (K) that travels inside a factory in which a pre-processing machine (30) that performs a pre-processing on a fiber bundle and a post-processing machine (50) that performs a post-processing on the fiber bundle subjected to the pre-processing are installed, the self-propelled (K) comprising:
an accommodating section for accommodating the fiber bundle;
a travelling section (26) that travels in the factory;
a map storage section (24) that stores therein a factory map indicating an installation position of equipment in the factory including installation positions of the pre-processing machine (30) and the post-processing machine (50);
a travelling route determining section (23) that determines, based on the factory map, a travelling route for travelling from the pre-processing machine (30) to the post-processing machine (50) or from the post-processing machine (50) to the pre-processing machine (30); and
a travelling control section (25) that causes the travelling section (26) to travel autonomously based on the determined travelling route.
